# EUROPEAN PATENT APPLICATION

(11) **EP 4 560 533 A1**
(43) Date of publication of application: **28.05.2025**
(21) Application number: 23211700.2
(22) Date of filing: 23.11.2023
(51) Int. Cl.: G06N 3/045, G06N 3/08, G06N 3/0985

(54) **MONITORING MACHINE LEARNING MODELS**

(71) Applicant: ABB SCHWEIZ AG, 5400 Baden (CH)
(72) Inventor: BORRISON, Reuben, 68782 Brühl (DE); MADUSKAR, Deepti, 462042 Bhopal (IN); SARKAR, Santonu, 560076 Bangalore (IN); ABUKWAIK, Hadil, 69469 Weinheim (DE); SHARMA, Divyasheel, 560048 Bangalore (IN); DIX, Marcel, 78476 Allensbach (DE); K R, Chandrika, 560078 Bangalore (IN); PLATENIUS-MOHR, Marie Christin, 69493 Hirschberg an der Bergstraße (DE); KLOEPPER, Benjamin, 68199 Mannheim (DE)
(74) Representative: Maiwald GmbH

(57) **Abstract**

Monitoring data, model and operational issues in distributed setup involving multiple machine learning models can present challenges. There is therefore provided a computer-implemented method for monitoring machine learning models in a distributed setup. The method comprises: obtaining model activity data relating to activity of the machine learning models in the distributed setup; analyzing the obtained model activity data; and, based on the analysis of the model activity data, outputting model management data for managing the activity of the machine learning models in the distributed setup. The method facilitates diagnosis of problems in the distributed setup and the taking of corrective measures in a timely, fault tolerant, and efficient manner.

## Description

### FIELD OF THE INVENTION

The invention relates to systems and methods for monitoring machine learning models.

### BACKGROUND

Multiple machine learning (ML) models can be deployed in a distributed setup. Due to their data-driven nature, the ML models need to be monitored. For example, in an industrial context, process and automation systems involving large numbers of parameters may be subject to data quality problems arising due to varying or infrequent conditions, sparse data collection, and variations in signal type, with some signals experiencing data quality problems more frequently than others. Monitoring the data, model and operational issues in the distributed setup can present challenges as different models experience issues at different times, leading to unnecessary downtime and impacted reliability.

### SUMMARY

To better address one or more of these concerns, there is provided, in a first aspect of the invention, a method for monitoring machine learning models in a distributed setup. The method comprises:
obtaining model activity data relating to activity of the machine learning models in the distributed setup;
analyzing the obtained model activity data;
based on the analysis of the model activity data, outputting model management data for managing the activity of the machine learning models in the distributed setup.

The model activity data may comprise any data relating to model activity. The model activity data may comprise for example data relating to issues experienced by one or more of the models in the distributed setup, i.e., model-related issues. The issues may relate to one or more of model quality, data quality, and/or operational quality. The model activity data may comprise performance-related data related to the performance of one or more of the models, expressed in terms of one or more performance metrics or KPls. The performance data may characterize a current performance and/or a predicted future performance of a said model. Performance metrics may comprise for example prediction error metrics and/or confidences. Performance may additionally or alternatively be defined using a rule-based algorithm. The model activity data may further comprise metadata describing the model activity data. The metadata may comprise one or more of: a timestamp; a types; a frequency; user feedback.

The obtained model activity data may be maintained in one or more knowledge databases, such as a global knowledge database storing model activity data collected from multiple models. The stored knowledge may thus reflect multiple types of issues experienced by multiple nodes, facilitating learning from model performance in multi-model deployments. The model activity data may collected, stored, and/or analyzed by one or more nodes of the distributed setup and/or by a central broker. The central broker may be configured to obtain the model activity data from the models by receiving asynchronous transmissions from the models and/or to query the models periodically to request the model activity data. Analysis of the model activity data may be based on model activity data collected from one or from multiple nodes of the distributed setup. Each node may comprise an issue cache or alert cache storing data relating to the issues experienced by that node. The cache of one or more nodes of the distributed setup may be updated following the analysis of the obtained model activity data, such that those nodes benefit from enhanced information concerning issues likely to be encountered, thereby providing faster mitigation of errors.

The obtained model activity data may relate to an unknown issue experienced by one of the models in the distributed setup. In this case, analyzing the model activity data may comprise generating a label for the unknown issue, and outputting the label as at least part of the model management data. Additionally or alternatively, analyzing the model activity data may comprise identifying one or more known issues which are similar to the unknown issue (determined for example with reference to one or more appropriate similarity metrics), and outputting data related to the one or more known similar issues as at least part of the model management data. Known similar issues may be identified by searching the knowledge database. Such labelling of unknown issues may be performed by an impact computation engine, such as that described herein. The impact computation engine may itself comprise a machine learning model trained to generate metadata describing the model activity data. The generated metadata may comprise the label for the unknown issue. The metadata may additionally or alternatively comprise cause-and-effect information concerning the model activity data, and/or the data relating to the one or more similar issues. The impact computation engine may be trained on the basis of plant topology information (including for example localization and propagation information) and/or historical model activity data to predict one or more of a cause-and-effect knowledge graph for the unknown issue, a list of known similar issues, and the label for the unknown issue.

Analyzing the model activity data may comprise predicting an issue that can arise in the distributed setup based on the model activity data. The prediction may be made by an issue forecaster comprising a machine learning model trained to make the prediction, for example by outputting a list of probable forecasted issues that can arise, based on the obtained model activity data. The issue forecaster may be further trained to attach a priority to the prediction. The priority may govern handling of the prediction by one or more nodes in the distributed setup. The prediction may relate to a current issue and/or a future issue. The issue forecaster may utilize data stored in the knowledge database for making the prediction. The issue forecaster may be trained on the basis of historical model activity data stored in the knowledge database. The issue forecaster may be trained centrally or using federated learning. The prediction may be output as at least part of the model management data. The prediction may be stored in the knowledge database. The prediction made by the issue forecaster may be transmitted to one or more nodes in the distributed setup. The nodes may store the prediction, for example in an alert cache. Additionally or alternatively, one or more nodes of the distributed setup may comprise an issue forecaster as described herein, or a compressed version thereof.

Subsequent to the output of the model management data, the method may comprise receiving user feedback on the model management data. User feedback may be stored in the knowledge database. The user feedback may pertain to the generated metadata (including labels) and/or to predicted issues, for example. The user feedback may comprise validation of the output model management data.

Analyzing the model activity data may comprise analyzing performance of the machine learning models in the distributed setup, wherein outputting the model management data comprises selecting one of the machine learning models for use based on its performance in current environmental conditions. The environmental conditions may comprise current operating conditions in an industrial automation system. Selecting the machine learning model may comprise selecting that machine learning model which is best suited to the environmental conditions. For example, if, during operation, a data quality problem is experienced, it might be beneficial to fall back to a model that is trained without the problematic signal. To that end, the distributed setup may comprise at least a first machine learning model trained with a known problematic signal and at least a second machine learning model trained without the known problematic signal, wherein selecting the machine learning model that is best suited to the environmental conditions comprises selecting the second machine learning model in response to the analysis of the model activity data indicating a data quality problem concerning the known problematic signal. In this way, using multiple machine learning models trained with and without 'common offenders', the capability is provided to switch between models depending on the current data quality situation. Selecting the machine learning model may be taken to mean using the prediction output of the selected machine learning model for controlling an industrial process and/or for informing a human about the current state or future state of the industrial process. Selecting one of the machine learning models for use based on its performance in current environmental conditions may comprise using a regret-minimization based online model selector/recommender to perform the selection.

Selection of machine learning models may be undertaken on the basis of model performance. Thus, analyzing the model activity data may comprise analyzing performance of the machine learning models in the distributed setup to determine model performance. Model performance may be determined over a particular timeperiod using at least one ML performance metric. The model having the highest performance metric may be selected. In the case that a candidate model has a higher performance metric than that for the currently-selected model, the candidate model may be used to replace the currently-selected model in response to the difference in performance metrics exceeding a predetermined threshold. By "candidate" is meant one of the machine learning models in the collection which is not currently selected but which may be selected to replace the currently-selected machine learning model. The performance metric used in the selection may comprise one or more of the following: an error metric; a confidence level; a predicted error metric; a rule-based determination of performance.

The method for monitoring machine learning models may further comprise utilizing a prediction output from at least one of the models in the distributed setup to control an industrial process and/or inform a human about the current state or future state of the industrial process. The industrial process may be carried out by an industrial automation system.

The present disclosure further provides a system and method for training a collection of machine learning models for use in the distributed setup. The machine learning models trained according to the present disclosure may be suitable for different environmental conditions (e.g, process and automation system conditions), so as to facilitate the model selection described herein. The method may comprise creating multiple training datasets, referred to herein as scenario datasets, representing different environmental conditions, and training multiple machine learning models using the scenario datasets to create a collection of machine learning models addressing the different environmental conditions. Creating the multiple scenario datasets may comprise splitting a training dataset into subsets that match predetermined conditions. The splitting may be performed based on clustering, defined value ranges for signals, or prior selection of time windows. Additionally or alternatively, the splitting may comprise identifying groups of signals in the training dataset that commonly experience data quality issues at the same time. Stated differently, actual training datasets may be created for machine learning by selecting multiple portions of the initial training dataset using timeperiods reflecting predetermined conditions and/or by selecting multiple subsets of signals according to predetermined quality issues. The various datasets produced in this way give rise to various trained machine learning models that match different environmental (e.g., plant) conditions.

It will be appreciated that the methods for monitoring machine learning models and the methods for training machine learning models as described herein may be performed by the same system or by different systems.

The method of the first aspect may be computer implemented.

According to a second aspect, there is provided a system for monitoring machine learning models configured to perform the method of the first aspect. The system may be a computing system.

According to a third aspect, there is provided a computer program (product) comprising instructions which, when executed by a computing system, enable or cause the computing system to perform the method of the first aspect.

According to a fourth aspect, there is provided a computer-readable (storage) medium comprising instructions which, when executed by a computing system, enable or cause the computing system to perform the method of the first aspect. The computer-readable medium may be transitory or non-transitory, volatile or non-volatile.

Systems and methods for monitoring machine learning models as described herein facilitate diagnosis of problems in the distributed setup and the taking of corrective measures in a timely, fault tolerant, and efficient (in terms of reducing network traffic) manner.

The term "monitoring" as used herein may be taken to comprise the monitoring, analysis, determination and/or control one or more of event occurrence, performance, or resource utilization in connection with the machine learning models in the distributed setup.

The term "distributed setup" as used herein relates to a multi-model deployment, in which the model may be deployed in a distributed fashion across sites or within a particular site.

Any of the units described herein, each of which may be described alternatively as a "module", "system", "engine", "unit", or "tool", may be implemented using hardware, firmware, and/or software configured to perform any of the operations or algorithms described herein. Hardware may comprise, singly or in any combination, hardwired circuitry, programmable circuitry such as computer processors comprising one or more individual instruction processing cores, or state machine circuitry. Firmware may be embodied as code, instructions and/or data stored or hardcoded in memory devices (e.g., non-volatile memory devices). Software may be embodied as a software package, code, instructions and/or data recorded on at least one transitory or non-transitory computer readable storage medium.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawings, in which:-
FIG. 1 illustrates a collection of machine learning models for use in a distributed setup;
FIG. 2 illustrates a system and method for monitoring machine learning models in a distributed setup according to a first embodiment of the present disclosure;
FIG. 3 illustrates a system and method for monitoring machine learning models in a distributed setup according to a second embodiment of the present disclosure;
FIG. 4 illustrates training of the system shown in FIG. 3;
FIG. 5 illustrates training of the collection 100 of machine learning models of FIG. 1; and
FIG. 6 illustrates a computing system that can be used in accordance with the systems and methods disclosed herein.

### DETAILED DESCRIPTION

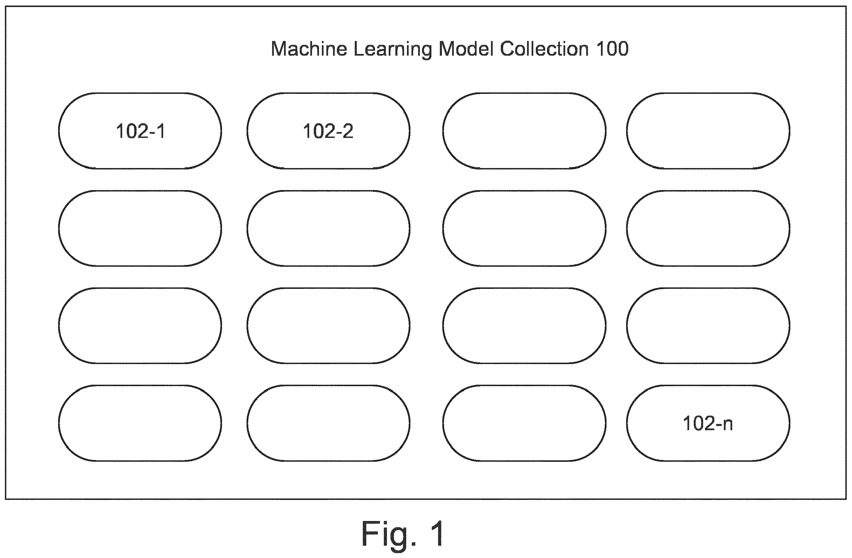

FIG. 1 illustrates a machine learning (ML) model collection 100 for use in a distributed setup. The ML model collection 100 comprises a plurality of ML models 102, labelled for illustration purposes as models 102-1, 102-2, ..., 102-n. Depending on the environment in which the collection 100 is deployed, the individual models 102 may be same as each other or similar, the models 102 may be different but trained using the same or similar data, or the models 102 may be deployed on the same or similar architecture. Distributed setups find application for example in edge computing environment or in industrial automation systems. For example, when deployed in an industrial context, each node of the distributed setup may be implemented as a version (including a lightweight version) of software, deployed on the node variously at Level 0 (e.g., as system-on-chip), Level 1 (e.g., as control logic and system components), Level 2 and 3 (as a server component) along with HMI for human feedback on model quality and alerting, Level 4 (plant site), or Level 5 (enterprise, e.g., on a server with alerting and feedback for the complete plant level process), where Levels 0 to 5 pertain to the Purdue Model for Industrial Control Systems.

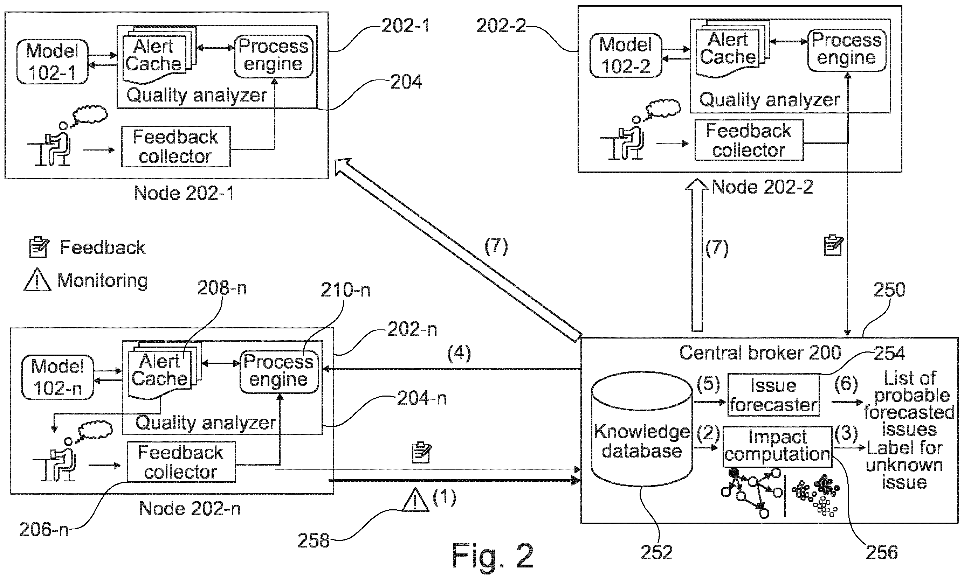

FIG. 2 illustrates one non-limiting example of a distributed setup in which the multiple ML models 102 are deployed.

The distributed setup comprises a plurality of nodes 202, labelled for illustration purposes as 202-1, 202-2, ..., 202-n, on each of which a respective one of the ML models 202 is deployed. Each node 202 further comprises a quality analyzer 204 and a feedback collector 206, such as the quality analyzer 204-n and the feedback collector 206-n illustrated as forming part of the node 202-n.

The feedback collector 206 collects user feedback from the user (who may be, for example, a member of maintenance staff, a process engineer, or any system expert). This feedback is used to improve predictions, as described further below.

The quality analyzer 204-n comprises an alert cache 208-n and a process engine 210-n. The process engine 210-n monitors the respective ML model 102-n for issues relating to model quality, data quality, and/or operational quality, as is known in the art. These issues, optionally together with their metadata such as timestamp of occurrence, type of issue, frequency of issue, etc., and optionally including collected user feedback, are stored in the alert cache 208-n in a format common to all nodes 202. To that end, a predefined template may be utilized for exchanging the said information between entities in the distributed setup. It will be gathered from FIG. 2 that each node 202 includes components corresponding to those described in connection with the node 202-n.

FIG. 2 also illustrates a system and method for monitoring the ML models 102 in the distributed setup according to a first embodiment of the present disclosure. In this case, the system for monitoring the ML models comprises a central broker 200. The central broker 200, which is in communication with the nodes 202, is configured to collect, store and analyze model activity data gathered by the quality analyzers 204, optionally together with metadata. To that end, the central broker 200 comprises a knowledge database 252, an issue forecaster 254, and an impact computation engine 256. The central broker 200 may be deployed for example as software operating at Level 5 of the plant or on the Cloud (especially in a multi-plant setting). The central broker 200 carries out a method for monitoring the ML models 102 in the distributed setup which comprises the following steps.

In step (1) of the method, as illustrated in FIG. 2, model activity data concerning a model-related issue is received by the central broker 200 from one of the quality analyzers 204. Additionally or alternatively, the central broker 200 periodically queries the nodes 202 to check their health status. FIG. 2 illustrates the node 202-n reporting an unknown model-related issue 258 to the central broker 200 to request more information pertaining thereto. The central broker 200 stores the issue in the global knowledge database 252, alongside historical issues previously received from the quality analyzers 204.

In step (2), the central broker 200 queries the impact computation engine 256 in relation to the reported issue. The impact computation engine 256 comprises an ML model trained to generate metadata describing model-related issues. In the non-limiting example shown in FIG. 2, the generated metadata comprise a label for the unknown issue. The metadata may additionally or alternatively comprise cause-and-effect information concerning the model-related issue, and/or a list of at least one similar or related issue retrieved from the knowledge database 252. In one example, the impact computation engine 256 is trained on the basis of plant topology information (including for example localization and propagation information) and/or past timeseries data to predict one or more of a cause-and-effect knowledge graph for the unknown issue, a list of similar or related issues, and the label for the unknown issue. The impact computation engine 256 may comprise a graph-attention network trained on topology and process data to output the cause-effect graph. More particularly, the training data for the graph attention network may comprise topology and process data, where topology is represented initially as an adjacency matrix, and then updated with graph-attention matrix learned from the process data (to represent the process conditions of the running plant). Additionally or alternatively, the impact computation engine 256 may comprise a classifier for the known issues. Training data for the classifier may comprise model activity data (e.g., performance/error metrics, confidence, etc.) in addition to labels for known issues. The impact computation engine 256 may be configured to apply a threshold to the outputs (class probabilities) of the classifier, below which the issues are flagged as unknown. The impact computation engine 256 may be configured to execute a similarity search and/or a clustering algorithm in relation to the unknown issue, and to allocate to the unknown issue the label of the nearest class. Additionally or alternatively, the impact computation engine 256 may be configured to assign to the unknown issue an "unknown" class, to continue collecting data pertaining to the unknown class over time, and to provide the unknown class with a meaningful label based on the collected data.

In step (3), the impact computation engine 256 generates the metadata, including the label, for the unknown issue reported by the node 202-n. The predicted metadata for the unknown issue may then be stored in the relevant entry in the knowledge database 252.

In step (4), the central broker 200 sends the metadata related to the unknown issue to the reporting node 202-n, thereby providing the user with enhanced information representing the current operating state of the system, facilitating greater understanding of such issues when they arise for improved fault diagnosis and correction.

In step (5), the central broker 200 uses the issue forecaster 254 to predict issues that can arise in the distributed setup given the current status of the nodes, represented for example by the reported issues. The issue forecaster 254 comprises an ML model trained to output a list of probable forecasted issues that can arise based on the reported issues, optionally including their corresponding priorities. The issue forecaster 254 has access to the data stored in global knowledge database 252. Historical issues from the database 252 are used to train the ML model of the issue forecaster 256 to predict probable issues in the distributed setup given the current state of the system. The issue forecaster 254 may comprise a classification-based issue forecasting model in a local or global scenario. In one non-limiting example of the local scenario, training data for the model comprises: [timestamp, model id, model- specific (based on model id) historical data from the global database for each issue, label for the issue (e.g., Concept Drift)]. The local forecasting model may comprise any classification algorithm such as NN/SVM. In one non-limiting example of the global scenario, training data for the model comprises: [model id, historical model performance, errors, labels (e.g., Data Drift Issue, Concept Drift Issue, Resource Availability Issue)]. The global forecasting model may comprise a sequence forecasting algorithm, e.g., Viterbi, wherein issues represent states and observations are represented by the historical performance/errors.

In step (6), the issue forecaster 254 outputs the said list. The list may then be stored in the relevant entry in the knowledge database 252.

In step (7), the central broker 200 distributes this list to the nodes 202, which store the list in their alert cache 208. This information can also be proactively shown to the user based on the priorities.

User feedback collected by the feedback collectors 206 of the various nodes 202 may be used to improve the information in the global knowledge database 252. The user may check the information stored in their respective alert cache 208 to validate the information stored therein and/or to provide feedback on predicted labels and/or on predicted issues provided by the central broker 200. Such user feedback is collected from the nodes 202 asynchronously and used to update the global knowledge database 252. It will be appreciated that not every node 202 may be configured to collect user feedback.

In a variant to the method described with respect to FIG. 2, a compressed version of the issue forecaster 254 is stored on each node 202, so that each node 202 can also predict issues that can arise, thereby reducing prediction time and overhead on the central broker 200, while providing a failsafe in the absence of a reliable connection to the central broker 200. The training of the forecasting models may be undertaken using federated learning, wherein the local model is trained on each node and the global model is built by aggregating the local models from all nodes, thereby reducing the communication overhead.

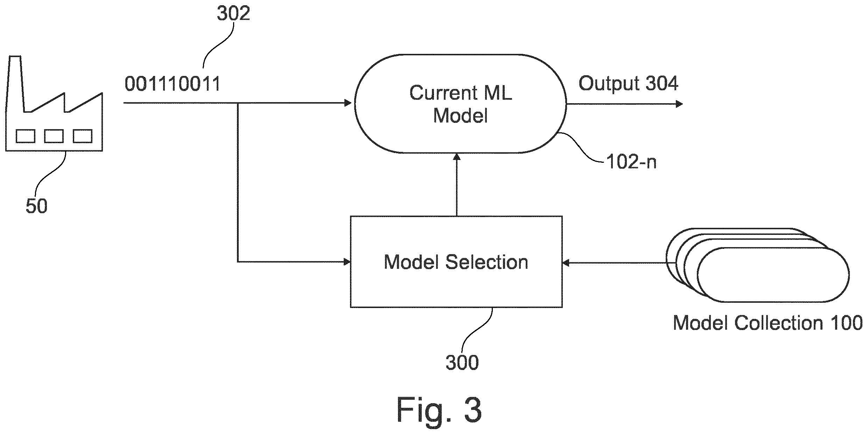

FIG. 3 illustrates a system for monitoring the ML models 102 in the distributed setup according to a second embodiment of the present disclosure. The system is configured to select one ML model 102 from the collection 100 for use based on environmental conditions, such as the current process and automation system conditions in an industrial context.

The currently-selected ML model 102 receives, from an automation system 50, data 302 relating to an industrial process and produces a prediction output 304 which is used to control the industrial process or inform a human about the current state or future state of the process. The system comprises a model selection engine 300, which is configured to receive and analyze the data 302 provided by the automation system 50 and to select, based on the outcome of the data analysis, the most appropriate ML model 102 of the collection 100 (including the currently-selected model 102) to produce the prediction output 304. The system 300 may comprise, or be comprised in, the central broker 200, or any other system for monitoring ML models in a distributed setup.

The model selection engine 300 may be configured to analyze the data 302 using one or more of the following data analysis techniques.

In a first variant, the models 102 in the model collection 100 are deployed in parallel and continuously produce predictions. The model selection engine 300 evaluates performance of the models 102 during a time window using at least one ML metric. If a model 102 other than the currently-selected model 102 performs significantly better, the model selection engine 300 selects the better-performing model for use, such that its output is used from that point onwards. To determine whether a model 102 performs significantly better, a simple threshold may be applied to the difference in the selected metric. Alternatively, the decision can be based on a statistical test of historical performance, for example by comparing error data from two models using Mann Whitney U or McNemar tests.

In a second variant, the models 102 in the model collection 100 are deployed in parallel and continuously produce predictions along with confidence assessments. The model selection engine 300 replaces the currently-selected model 102 with another model 102 if that other model 102 has a significantly higher confidence (with significance again being determined using at least one threshold). If several models 102 have a significantly higher confidence, the most confident model 102 is selected.

In a third variant, the model selection engine 300 comprises an ML model trained to predict future performance of the models 102 in the model collection 100 based on the process data 302 received from the automation system 50. The model selection engine 300 replaces the currently-selected model 102 with another model 102 if that other model 102 is predicted to perform significantly better (with significance again being determined using at least one threshold). If several models 102 are predicted to perform significantly better, the model 102 with the best predicted performance is selected.

In a fourth variant, the model selection engine 300 calculates data quality metrics based on the process data 302. The model selection engine 300 executes a rule-base algorithm to determine when the data quality of the currently-selected model 102 deteriorates to such an extent that switching to a different model 102 that can operate without a problematic signal is justified. If one or more rules evaluate to TRUE for a candidate model 102, that model is selected. If no model 102 is available that matches all firing rules, the model 102 that matches most of the rules is selected. One non-limiting example may comprise the following: if the proportion of outliers in a signal is more than 10%, drop the signal as a feature, and select a model that predicts based on the new subset of the features.

It will be appreciated that combinations of these techniques may be used.

The process of switching between models can be carried out in several ways. In one example, the program (service) serving the currently-selected model 102 is stopped and restarted with the newly-selected model. In another example, traffic from the model consumer is redirected to a new endpoint. In yet another example, the model selection engine 300 operates as a load balancer to reroute traffic from the model consumer and the incoming data 302 from the plant 50.

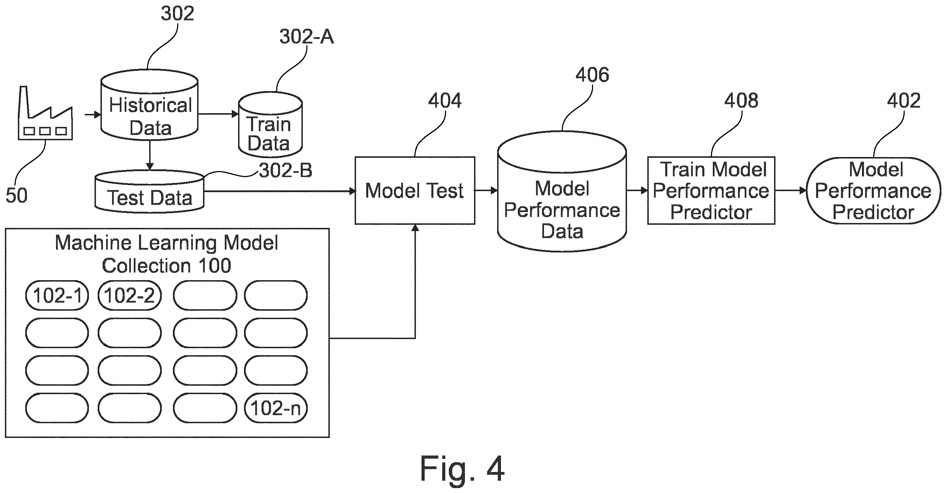

FIG. 4 illustrates training of the system shown in FIG. 3, in the case that the model selection engine 300 predicts model performance. In one example, the model selection engine 300 comprises a model performance predictor 402, in the form of an ML model that predicts the future performance of one of the ML models 102 based on the process data 302.

Historical data 302 output by the automation system 50 is split into a training dataset 302-A and a test dataset 302-B. It will be appreciated however that the splitting of the data is not a mandatory step and that the training data may also be used later as test data. The training dataset 302-A is used to train the ML models 102 in the collection 100, as described hereinbelow, while the test dataset 302-B is used to test the ML models 102 in the model collection 100. A model test engine 404 uses the test data 302-B as input to each of the ML models 102 and the models produce their predictions as output. The model test engine 404 calculates errors in the individual predictions, which may be aggregated over a time window using a suitable machine learning metric such as (root-)mean-squared error, mean absolute error, mean absolute percentage error for regression and (balanced) accuracy, f1 score, AUR-ROC for classification. The error metrics are used as regression or classification targets (if discretized), together with the test dataset 302-B, as model performance data 406 for the training 408 of the model performance predictor 402. The model performance predictor 402 is thus trained to predict the future performance (as an error metric) of the ML models 102 based on the process data 302. Or, regret minimization may be used for online learning a data stream so as to select the best sequence of models from the set of available models. The online learner serves as a recommender to choose a specific model over other available models.

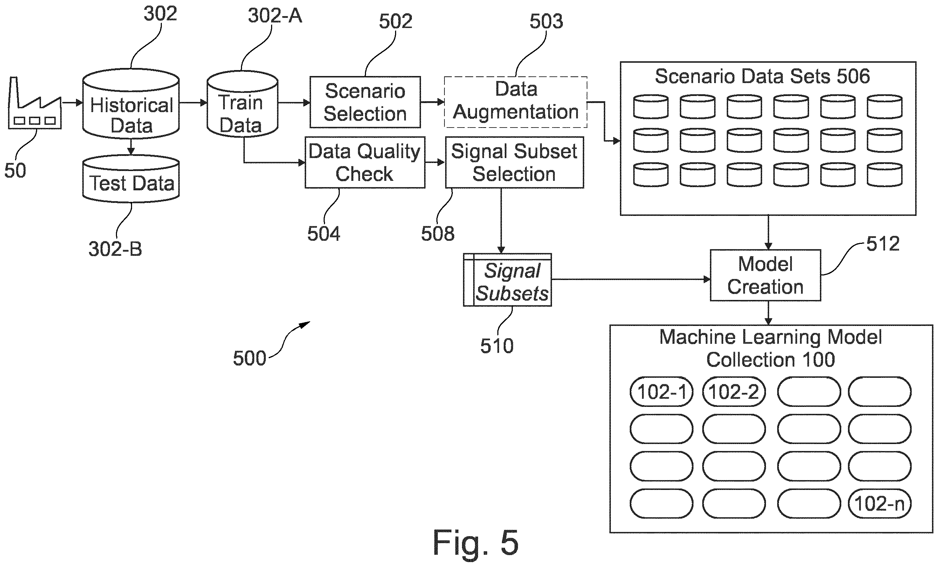

FIG. 5 illustrates training 500 of the collection 100 of ML models 102. The training dataset 302-A is processed in two different ways.

Firstly, a number of scenarios are selected from the training dataset 302-A in a scenario selection step 502. The scenarios split the data along the time-axis in order to represent different states of the process and of the automation system 50, in order to create smaller, scenario datasets 506 having a different data distribution than the larger, training dataset 302-A. The present disclosure envisages several ways to create the scenario datasets 506, as follows.
- Perform clustering on the training dataset 302-A and use the clusters as the scenario datasets 506.
- Utilize predefined selection criteria such as value ranges on certain signals to split the data 302-A, to account for the fact that certain signals are strongly associated with different plant states, for examples flows that reflect the load of the plant 50 or analyzer results that reflect raw material composition or product quality.
- Use prior knowledge concerning periods with different conditions, e.g., informal knowledge about raw material quality or equipment issues, to split the data 302-A into the scenario datasets 506.
- Analyze the data 302-A for seasonality, e.g. to identify the impact of environmental conditions (temperature, humidity) that are not measured on the production process, to split the data into the scenario datasets 506.

As an optional step, a data augmentation process 503 is performed to create artificial data from the scenario datasets 506 in order to create larger datasets more suitable for machine learning, for example using approaches involving generative ML models such as generative adversarial networks (GAN) or variational autoencoders (VA), or more conventional methods such as random transformation cropping, flipping, or jittering.

Secondly, the quality of the training dataset 302-A is analyzed during a data quality check 504. This happens individually for each signal in the training dataset 302-A. One or more data quality metrics (e.g., noise level, number of outliers, missing data, etc.) are calculated for each signal in a windowed fashion (e.g. using sliding windows, the window size is a parameter). For each quality metric, a predefined threshold is used to differentiate between acceptable (OK) and not acceptable (NOK) data quality. The thresholds may be defined specifically for each signal or type of signal (binary signal, temperature, flow, density, etc.).

In a signal subset selection step 508, signal subsets 510 are selected, that is, groups of signals that frequently experience data quality issues at the same time. This may be achieved by performing correlation analysis between the OK and NOK values for the signals and grouping those signals together that show a high correlation. The calculation may be performed pairwise for signals A and B by calculating the empirical probability of p(B=NOKIA=NOK). A high probability shows that B tends to be not okay if A also tends to be not okay. From the pairwise correlation, groups of signals (correlated offenders) are identified, for example by searching for connected components on a graphical representation of the conditional probabilities (where the signals are vertexes and conditional probability above a threshold establishes an edge in the graph). The identified groups of correlated offenders create a selection of signals where, for each group, only those signals that are not part of the group are used for machine learning training. The selected subsets 510 are then used in combination with the scenario datasets 506 (which contain all signals) in the training of the models 102 in the collection 100.

In the model creation step 512, the ML models 102 are trained in the following way:
- Each scenario dataset 506 is first taken with the full set of signals;
- Then, each signal subset 510 is applied to each scenario dataset 506;
- The signal subset 510 functions as a filter to remove a group of signals from the scenario dataset 506;
- Each selection from the scenario dataset 506 results in one actual training dataset;
- Some combinations are optionally excluded if, for instance, certain data exhibit a quality which is unlikely in certain process and automation system conditions.

The model creation step 512 performs the fitting of the ML models 102 on the actual training datasets. This step may further incorporate a grid search for hyperparameters or a hyperparameters optimization and a selection of the basic ML model 102 (e.g., selection between decision trees, random forest, gaussian regression, types of neural network, etc.). The model creation step 512 may further comprise utilization of techniques such as pre-training or self-supervised training, in which a deep learning model is trained on proxy labels (e.g., predicting the next step, reproducing the data) and in which the pre-training or self-supervised learning step uses the full training dataset 302-A and the actual learning task uses only the actual training datasets (i.e., those that are created by combining the signal subsets 510 and the scenario datasets 506). As a result of the model creation step 512, for each combination of scenario dataset 506 and signal subset 510, a matching ML model is created. The ML models 102 so created come together to form the collection 100, in which each model 102 is able to cope differently well with different process and automation system conditions.

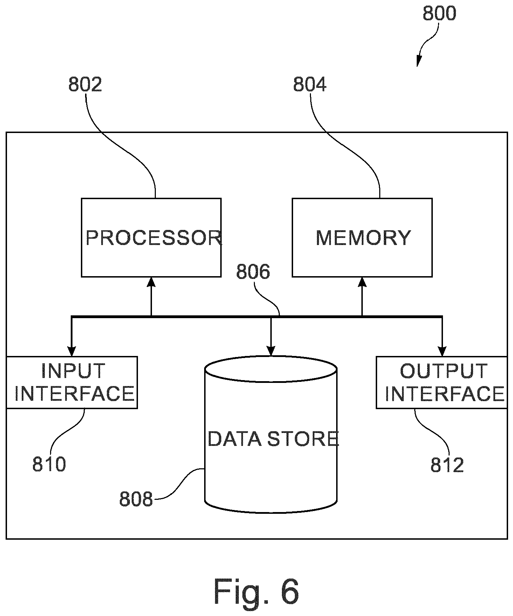

FIG. 6 illustrates an exemplary computing system 800 that can be used in accordance with the systems and methods disclosed herein. The computing system 800 may form part of or comprise any desktop, laptop, server, or cloud-based computing system. The computing system 800 includes at least one processor 802 that executes instructions that are stored in a memory 804. The instructions may be, for instance, instructions for implementing functionality described as being carried out by one or more components described herein or instructions for implementing one or more of the methods described herein. The processor 802 may access the memory 804 by way of a system bus 806. In addition to storing executable instructions, the memory 804 may also store conversational inputs, scores assigned to the conversational inputs, etc.

The computing system 800 additionally includes a data store 808 that is accessible by the processor 802 by way of the system bus 806. The data store 808 may include executable instructions, log data, etc. The computing system 800 also includes an input interface 810 that allows external devices to communicate with the computing system 800. For instance, the input interface 810 may be used to receive instructions from an external computer device, from a user, etc. The computing system 800 also includes an output interface 812 that interfaces the computing system 800 with one or more external devices. For example, the computing system 800 may display text, images, etc. by way of the output interface 812.

It is contemplated that the external devices that communicate with the computing system 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 800 may be a distributed system. Thus, for instance, several devices may be in communication by way of a network connection and may collectively perform tasks described as being performed by the computing system 800.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A computer-implemented method for monitoring machine learning models in a distributed setup, the method comprising:
obtaining model activity data relating to activity of the machine learning models in the distributed setup;
analyzing the obtained model activity data;
based on the analysis of the model activity data, outputting model management data for managing the activity of the machine learning models in the distributed setup.

2. The method of claim 1, further comprising maintaining the obtained model activity data and/or the model management data in one or more knowledge databases.

3. The method of claim 1 or 2, further comprising updating a cache of one or more nodes of the distributed setup with the obtained model activity data and/or the model management data.

4. The method of any preceding claim, wherein the obtained model activity data relates to an issue reported by one of the models in the distributed setup, wherein the reported issue is an unknown issue, and wherein analyzing the model activity data comprises generating a label for the unknown issue, the method comprising outputting the label as at least part of the model management data.

5. The method of claim 4, wherein analyzing the model activity data further comprises identifying at least one known issue which is similar to the unknown issue, the method comprising outputting data related to the at least one known similar issue as at least part of the model management data.

6. The method of claim 4 or 5, wherein analyzing the model activity data further comprises predicting a cause-and-effect knowledge graph for the unknown issue, the method comprising outputting the cause-and-effect knowledge graph as at least part of the model management data.

7. The method of any preceding claim, wherein the obtained model activity data relates to an issue reported by one of the models in the distributed setup, wherein analyzing the model activity data comprises predicting a further issue that can arise in the distributed setup based on the model activity data, the method comprising outputting the predicted further issue as at least part of the model management data.

8. The method of any of claims 4-7, wherein the reported issue or the predicted issue relates to one or more of model quality, data quality, and operational quality.

9. The method of any preceding claim, further comprising receiving user feedback on the model management data and storing the user feedback in a knowledge database.

10. The method of any preceding claim, wherein analyzing the model activity data comprises analyzing performance of the machine learning models in the distributed setup, and wherein outputting the model management data comprises selecting one of the machine learning models for use based on environmental conditions.

11. The method of claim 10, comprising determining model performance over a particular timeperiod using at least one performance metric, wherein, in the case that a candidate model has a higher performance metric than that determined for a currently-selected model, the method comprises using the candidate model to replace the currently-selected model in response to a difference between the performance metrics for the two models exceeding a predetermined threshold.

12. The method of claim 10 or 11, wherein the distributed setup comprises at least a first machine learning model trained with a known problematic signal and at least a second machine learning model trained without the known problematic signal, wherein selecting the machine learning model based on environmental conditions comprises selecting the second machine learning model in response to the analysis of the model activity data indicating a data quality problem concerning the known problematic signal.

13. The method of any preceding claim, further comprising utilizing a prediction output from at least one of the models in the distributed setup to control an industrial process or to inform a human about the current state or future state of the industrial process.

14. A system for monitoring machine learning models configured to perform the method of any preceding claim.

15. A computer-readable medium comprising instructions which, when executed by a computing system, cause the computing system to perform the method of any of claims 1-13.
